# EUROPÄISCHE PATENTSCHRIFT

(11) **EP 4 474 228 B1**
(45) Veröffentlichungstag und Bekanntmachung des Hinweises auf die Patenterteilung: **01.10.2025**
(21) Anmeldenummer: 24174912.6
(22) Anmeldetag: 08.05.2024
(51) Int. Cl.: B60R 22/18, B60N 2/68

(54) **FAHRZEUGSITZ MIT GURTSYSTEM**
VEHICLE SEAT WITH BELT SYSTEM
SIÈGE DE VÉHICULE AVEC SYSTÈME DE CEINTURE

(30) Priorität: 06.06.2023 DE 102023114893
(43) Veröffentlichungstag der Anmeldung: 11.12.2024
(73) Patentinhaber: GRAMMER AG, 92289 Ursensollen (DE)
(72) Erfinder: Pelka, Joachim, 92224 Amberg (DE); Klemm, Michael, 92224 Amberg (DE)
(74) Vertreter: Hannke, Christian

(56) Entgegenhaltungen:
- JP-A- 2016 030 498
- US-B1- 8 419 127
- US-B2- 8 303 042

## Beschreibung

Die vorliegende Erfindung betrifft einen Fahrzeugsitz mit einem Gurtsystem, wobei das Gurtsystem ein Gurtelement und einen Auf- und Abrollmechanismus aufweist, welcher dazu vorgesehen und ausgebildet ist, dass Gurtelement auf- und abzurollen, und wobei das Gurtsystem eine Umlenkeinheit mit einem Umlenkelement aufweist, wobei das Umlenkelement dazu vorgesehen und ausgebildet ist, dass Gurtelement in Richtung einer Person umzulenken. Derartige Systeme sind aus dem Stand der Technik gut bekannt, weisen aber grundsätzlich den Nachteil auf, dass sie relativ nah an dem Fahrzeugsitz bzw. mit dem Fahrzeugsitz verbunden sind, sodass eine Umlenkung bzw. eine ergonomische Gurtführung für große und kleine Fahrer gleichermaßen nicht vorgesehen ist. Des Weiteren ist es aus dem Stand der Technik so bekannt, dass die Gurtumlenkungen bzw. die Gurtführungen relativ starr ausgebildet sind, sodass kleineren Bewegungen der Person auf dem Fahrzeugsitz sitzend nicht nachgefolgt werden kann. US8419127B1 offenbart einen Fahrzeugsitz gemäß dem Oberbegriff des Anspruchs 1.

Es ist daher die Aufgabe der vorliegenden Erfindung, einen Fahrzeugsitz bereitzustellen, mittels welchem eine gute Gurtführung und eine Umlenkung des Gurtelements ermöglicht ist uns der Komfort für eine Person, welche auf dem Fahrzeugsitz sitzt, deutlich verbessert werden kann.

Gelöst wird diese zugrunde liegende Aufgabe durch einen Fahrzeugsitz mit einem Gurtsystem mit den Merkmalen des Patentanspruchs 1.

Kerngedanke der vorliegenden Erfindung ist es, einen Fahrzeugsitz mit einem Gurtsystem bereitzustellen, wobei das Gurtsystem ein Gurtelement und einen Auf- und Abrollmechanismus aufweist, welche dazu vorgesehen und ausgebildet ist, das Gurtelement auf- und abzurollen, und wobei das Gurtsystem eine Umlenkeinheit mit einem Umlenkelement aufweist, wobei das Umlenkelement dazu vorgesehen ausgebildet ist, das Gurtelement in Richtung einer Person umzulenken. Die Umlenkeinheit weist ein elastisch deformierbares Beabstandungselement auf, welches an dem Fahrzeugsitz angeordnet ist und wobei das Umlenkelement derart an den Beabstandungselement angeordnetes, sodass das Umlenkelement von dem Fahrzeugsitz beabstandet ist.

Dadurch, dass das Umlenkelement von dem Fahrzeugsitz beabstandet ist, bedeutet dies, dass das Umlenkelement zu dem Fahrzeugsitz einen gewissen Abstand aufweist. Das Umlenkelement ist daher mittels des Beabstandungselements insbesondere indirekt mit dem Fahrzeugsitz verbunden.

Alternativ kann der Begriff Gurtelement auch als ein Gurtband verstanden werden. Ebenso kann der Auf- und Abrollmechanismus als Gurtaufroller oder Gurtrollelement verstanden werden.

Die Formulierung, dass das Gurtelement in Richtung einer Person umlenkbar ist, bedeutet insbesondere, dass das Gurtelement mittels der Umlenkeinheit und insbesondere mittels des Umlenkelements derart geführt und umgelenkt werden kann, dass das Gurtelement von dem Auf- und Abrollmechanismus in Richtung der Person umgelenkt bzw. geführt werden kann. Insbesondere ist die Person eine Person, welche auf dem Fahrzeugsitz Platz genommen hat und darauf sitzt.

Wie bereits erwähnt, fungiert das Beabstandungselement als ein Zwischenelement zwischen dem Umlenkelement und dem Fahrzeugsitz.

Dadurch, dass das Beabstandungselement elastisch deformierbar ausgebildet ist, kann es insbesondere beim Auftreten von Kräften, weiter bevorzugt Zugkräften, dazu führen, dass das elastisch deformierbare Element eben elastisch deformiert werden kann. Dies bedeutet, dass das Beabstandungselement in einem Zustand, in welchem keine Kräfte auf das Beabstandungselement wirken, in seiner Null-Position angeordnet ist. Falls Kräfte, insbesondere Zugkräfte, auf das elastisch deformierbare Beabstandungselement einwirken, kann durch die Kräfte bzw. die einwirkende Kräfte auf das Beabstandungselement das Beabstandungselement elastisch deformiert werden, d. h., dass das Beabstandungselement verbogen bzw. gebogen wird in einen deformierten Zustand. Befindet sich das Beabstandungselement in einem deformierten Zustand, und wirken keine weiteren Kräfte mehr auf das Beabstandungselement, so bewegt sich das Beabstandungselement von dem deformierten Zustand wieder zurück in seine Null-Position.

Unter den einwirkenden Kräften auf das Beabstandungselement sind insbesondere die Kräfte gemeint, welche mittels bzw. aufgrund der einwirkenden Kräfte auf das Gurtelement auf das Beabstandungselement übertragen werden können. Beispielsweise können Kräfte auf das Gurtelement einwirken bei einer Bewegung der auf dem Fahrzeugsitz sitzenden Person, bei Beschleunigungsmanövern, bei Unfällen und dergleichen. Dadurch, dass sich die Person relativ zu dem Fahrzeugsitz bewegen möchte in diesen Fällen, wird die Bewegung der Person auf das Gurtelement übertragen und entsprechend dann auch auf das Beabstandungselement.

Es ist daher besonders bevorzugt gemäß der vorliegenden Erfindung vorgesehen, dass eben kleinere Bewegungen der Person auf dem Fahrzeugsitz durch das deformierbare Beabstandungselement gut nachgefolgt werden kann, sodass der Person ein verbesserter Komfort hinsichtlich kleinerer Bewegungen auf dem Fahrzeugsitz bereitgestellt werden kann. Aus dem Stand der Technik sind derartige Nachfolgungen des Beabstandungselements nicht vorgesehen, sodass bei Auftreten von Kräften auf das Gurtelement der Auf- und Abrollmechanismus blockiert und dementsprechend auch die Bewegung der Person auf dem Fahrzeugsitz blockiert.

Dieser Nachteil wird durch die vorliegende Erfindung, insbesondere dem elastisch deformierbaren Beabstandungselement, behoben und eine verbesserte und komfortablere Gurtführung gewährleistet.

Gemäß der Erfindung ist vorgesehen, dass das elastisch deformierbare Beabstandungselement derart ausgebildet ist, dass bei einer Deformierung des Beabstandungselements bis zu einem vorbestimmten Grenzwinkel die Deformierung des Beabstandungselement elastisch ist und ab dem Grenzwinkel die Deformierung des Beabstandungselement plastisch ist.

Beim Erreichen des Grenzwinkels ändert sich eine Belastung des Beabstandungselements von einer Biegebelastung zu einer Zugbelastung, wodurch von einer elastischen Deformierung zu einer plastischen Deformierung gewechselt wird.

Dadurch, dass das Beabstandungselement ab einem bestimmten Grenzwinkel plastisch deformiert ist bzw. werden kann, hat dies zur Folge, dass bei Auftreten von besonders hohen bzw. kritischen Kräften das Beabstandungselement plastisch deformiert wird, wodurch Kräfte aufgenommen werden können, um Belastungen der auf dem Fahrzeugsitz sitzenden Person aufnehmen zu können. Für kleinere Krafteinwirkungen ist es vorgesehen, dass das Beabstandungselement bis zu dem Grenzwinkel elastisch deformiert werden kann. Die plastische Verformung bzw. Deformierung hat dementsprechend einen Sicherheitsaspekt, insbesondere bei Unfällen, Crashs oder dergleichen.

Besonders bevorzugt kann es vorgesehen sein, dass der vorbestimmte Grenzwinkel 45° beträgt.

Insbesondere kann der erfindungsgemäße Fahrzeugsitz, auch insbesondere in Verbindung mit dem vorbestimmten Grenzwinkel, die Anforderungen bzw. Forderungen der SAE J2292 gerecht werden und auch entsprechend den darin definierten Zugversuch gut bestehen.

Gemäß einer besonders bevorzugten Ausführungsform kann das Beabstandungselement besonders einfach dargestellt werden, wenn das elastisch deformierbare Beabstandungselement schichtartig ausgebildet ist. Besonders bevorzugt weist daher das Beabstandungselement eine Schichtstruktur auf, und wobei bevorzugt die Schichtstruktur aus zumindest zwei Schichten besteht. Dabei kann es bevorzugt vorgesehen sein, dass die Schichten der Schichtstruktur gleichartig ausgebildet sind. Bei mehreren Schichten, d. h. bei mehr als zwei Schichten, kann es vorgesehen sein, dass einzelne Schichten zueinander identisch ausgebildet sind und weiter einzelne oder weitere Schichten andersartig ausgebildet sind. Hierdurch kann es möglich sein, das Beabstandungselement entsprechend den vorliegenden Anforderungen auszubilden.

Gemäß einer weiteren bevorzugten Ausführungsform kann es vorgesehen sein, dass das Beabstandungselement ein Sicherungselement aufweist, welches die verschiedenen Schichten des Beabstandungselements miteinander verbindet und dabei bevorzugt dazu vorgesehen und ausgebildet ist, bei einem Winkel größer als dem vorbestimmten Grenzwinkel zu versagen und daher die plastische Deformierung des Beabstandungselement zu ermöglichen.

Weiter kann das elastisch deformierbare Beabstandungselement gemäß einer bevorzugten Ausführungsform derart ausgebildet sein, dass jede Schicht der Schichtstruktur ein Blattfederelement ist. Besonders bevorzugt können die Schichten, wie bereits ausgeführt, unterschiedlich ausgebildet sein, sodass auch die Blattfederelemente zueinander verschieden sein können.

Gemäß einer weiteren bevorzugten Ausführungsform kann es vorgesehen sein, dass das Beabstandungselement länglich ausgebildet ist. Bevorzugt weist daher das Beabstandungselement eine Erstreckungsrichtung auf, in welche sich die längliche Erstreckung des Beabstandungselements erstreckt. Weiter bedeutet länglich ausgebildet, dass im Vergleich zu der Erstreckung in der Erstreckungsrichtung die Höhenerstreckung sowie die Breitenerstreckung kleiner ausgebildet sind als die Erstreckung in der Erstreckungsrichtung.

Hierdurch ist es möglich, das Beabstandungselement gut an dem Fahrzeugsitz anzuordnen und entsprechend den Herausforderungen bzw. den Bedarf an den Fahrzeugsitz mit dem Gurtsystem anzupassen.

Weiter bevorzugt ist es gemäß einer Ausführungsform vorgesehen, dass das Beabstandungselement ein erstes Ende und ein zweites Ende aufweist. Besonders bevorzugt ist das erste Ende mit dem Fahrzeugsitz verbunden. Weiter bevorzugt kann es vorgesehen sein, dass das Umlenkelement an dem zweiten Ende des Beabstandungselement angeordnet ist. Bevorzugt ist es vorgesehen, dass das Beabstandungselement fest mit dem Fahrzeugsitz verbunden ist.

Um den Komfort für eine auf dem Fahrzeugsitz sitzenden Person weiter verbessern zu können, ist es besonders bevorzugt vorgesehen, dass das elastisch deformierbare Beabstandungselement gegenüber dem Fahrzeugsitz verlagert und/oder drehbar angeordnet ist. Jedoch kann es für eine Person möglich sein, die Position des Umlenkelements hinsichtlich des Fahrzeugsitzes einzustellen, sodass das Umlenkelement an der korrekten Position für den Fahrer angeordnet ist. Wie erwähnt, kann das elastisch deformierbare Beabstandungselement gegenüber dem Fahrzeugsitz verlagert werden. Beispielsweise ist es hier möglich, eine Führung mittels einer oder mehrerer Nut- und Federelemente bereitzustellen, wobei bevorzugt die Nut an dem Beabstandungselement und die Feder an dem Fahrzeugsitz angeordnet ist. Alternativ oder kumulativ kann es vorgesehen sein, dass das elastisch deformierbare Beabstandungselement gegenüber dem Fahrzeugsitz drehbar angeordnet ist. Dies kann bedeuten, dass durch ein Drehen des Beabstandungselements das Beabstandungselement entsprechend ausgerichtet werden kann.

Besonders bevorzugt kann es vorgesehen sein, dass eine Verlagerung bzw. eine Drehung des Beabstandungselements gegenüber dem Fahrzeugsitz eine lösbare Verbindung darstellt, wobei die Verbindung zwischen dem Beabstandungselement und dem Fahrzeugsitz eben gelöst werden kann und auch das Beabstandungselement wieder fest mit dem Fahrzeugsitz verbunden werden kann, insbesondere nach einer Verlagerung und/oder Drehung des Beabstandungselements.

Durch die feste Verbindung des Beabstandungselements zu dem Fahrzeugsitz kann eine ungewollte Bewegung des Beabstandungselements verhindert werden, um eine entsprechend gute Positionierung des Umlenkelement gegenüber dem Fahrzeugsitz zu haben und eine gute Krafteinwirkung bzw. Krafteinlenkung auf das Umlenkelement bzw. den Beabstandungselement gewährleistet werden kann.

Besonders vorteilhaft kann das elastisch deformierbare Beabstandungselement bereitgestellt werden, wenn das Beabstandungselement aus einem oder mehreren Metallen und/oder Metalllegierungen besteht. Besonders bevorzugt kann es vorgesehen sein, dass das Beabstandungselement aus einem korrosionsbeständigen Federstahl, insbesondere einem nicht-rostenden Federstah, besteht bzw. hergestellt ist. Durch das Ausbilden des Beabstandungselements aus Metallen bzw. Metalllegierungen kann eine gute Balance zwischen einer Deformierung und einer Stabilität bzw. Steifigkeit bereitgestellt werden.

Das Material des korrosionsbeständigen Federstahls ist dabei besonders bevorzugt, da eben genau dieses die geforderten Anforderungen an das Beabstandungselement bereitstellen kann. Ebenso ist Edelstahl leicht verfügbar und kostentechnisch weiterhin günstig zu erwerben.

Zur weiteren Komforterhöhung für einen Benutzer des Fahrzeugsitz bzw. der Person auf dem Fahrzeugsitz kann es gemäß einer besonders bevorzugten Ausführungsform vorgesehen sein, dass das Umlenkelement drehbar mit dem elastisch deformierbaren Beabstandungselement verbunden ist. Dies bedeutet, dass das Umlenkelement drehbar mit dem Beabstandungselement verbunden ist, wodurch das Gurtelement, welches sich durch das Umlenkelement erstreckt bzw. mittels des Umlenkelements umgelenkt werden kann, durch Beanspruchungen zur Seite, also durch Krafteinwirkung senkrecht zu einer Zugkrafteinwirkung, einer Auslenkung des Gurtelements gut nachgefolgt werden kann.

Weiter kann es gemäß einer bevorzugten Ausführungsform vorgesehen sein, dass der Fahrzeugsitz eine Rückenlehne aufweist. Weiter bevorzugt ist es vorgesehen, dass das elastisch deformierbare Beabstandungselement mit der Rückenlehne verbunden ist. Bevorzugt ist er diese Verbindung zwischen dem Beabstandungselement und der Rückenlehne derart, dass das Beabstandungselement an einem rückwärtigen Teil der Rückenlehne, an einem seitlichen Teil der Rückenlehne, und/oder an einem oberen Teil der Rückenlehne angeordnet ist.

Dies bedeutet, dass das Beabstandungselement und dementsprechend auch das Umlenkelement entsprechend positioniert werden können, sodass möglichst eine gute Positionierung des Gurtelements hinsichtlich der auf dem Fahrzeugsitz sitzenden Person möglich ist. Das Beabstandungselement sollte derart angeordnet sein, dass es im Fahrbetrieb bzw. bei der Benutzung des Fahrzeugsitzes möglichst nicht störend auf die Person wirken kann. Besonders bevorzugt ist es vorgesehen, dass das Beabstandungselement an dem rückwärtigen Teil der Rückenlehne angeordnet ist. Dies ist besonders dann vorteilhaft, wenn auch der Auf- und Abrollmechanismus an dem rückwärtigen Teil der Rückenlehne angeordnet ist oder hinter der Rückenlehne angeordnet ist. Eine Befestigung an einem seitlichen Teil der Rückenlehne ist dabei abhängig von den Platzverhältnissen nach links bzw. nach rechts im Fahrzeug bzw. hinsichtlich des Fahrzeugsitzes. Gleiches gilt natürlich in ähnlicher Weise für den oberen Teil der Rückenlehne, wobei es bevorzugt vorgesehen sein kann, dass eine Kopfstütze vorgesehen ist. Für den Fall, dass diese Kopfstütze vorgesehen ist, ist es besonders bevorzugt derart, dass das Umlenkelement auf einer Höhe mit der Kopfstütze angeordnet sein kann.

Gemäß einer weiteren bevorzugten Ausführungsform kann es vorgesehen sein, dass der Auf- und Abrollmechanismus hinter der Rückenlehne angeordnet ist. Weiter bevorzugt kann es vorgesehen sein, dass der Auf- und Abrollmechanismus an einem Sitzteil des Fahrzeugsitzes und/oder an einem Fahrzeugsitzunterteil angeordnet ist. Das Sitzteil kann dementsprechend als das Element des Fahrzeugsitzes verstanden werden, auf welchem die Person sitzen kann. Das Fahrzeugsitzunterteil kann dabei derart verstanden werden, dass dies ein Trageteil darstellt, auf welchen der Fahrzeugsitz an sich angeordnet ist.

Durch diese Anordnung des Auf- und Abrollmechanismuses ist es dementsprechend möglich, dass mit der Bewegung des Fahrzeugsitzes bei einer Längsverstellung, bei einer Breitenverstellung und/oder einer Höhenverstellung der Auf- und Abrollmechanismus mit dem Fahrzeugsitz bewegt wird bzw. mit dem entsprechenden Element. Dies gilt auch hinsichtlich einer Drehung des Fahrzeugsitzes. Dies bedeutet, dass der Auf- und Abrollmechanismus sich gleichermaßen mit dem Fahrzeugsitz bzw. dem Fahrzeugsitzunterteil bewegen kann, sodass eben dieser Mechanismus entsprechend positioniert werden kann.

Gemäß einer weiteren bevorzugten Ausführungsform kann es vorgesehen sein, dass zwischen dem Auf- und Abrollmechanismus und dem Umlenkelement ein Führungselement angeordnet ist zum Führen des Gurtelements. Dies bedeutet, dass das Führungselement dazu vorgesehen und ausgebildet ist, das entsprechend vorgesehene Gurtelement zu führen, d. h., in diesem Falle zu dem Umlenkelement hinzuführen.

Gemäß einer weiteren bevorzugten Ausführungsform kann es vorgesehen sein, dass das Führungselement zwischen dem Fahrzeugsitz und dem elastisch deformierbaren Beabstandungselement angeordnet ist. Hierdurch ist es möglich, den Platz zwischen dem Fahrzeugsitz und dem Beabstandungselement bzw. zwischen der Rückenlehne und dem Beabstandungselement effizient auszunutzen.

Alternativ kann es gemäß einer weiteren bevorzugten Ausführungsform vorgesehen sein, dass das Führungselement auf einer dem Fahrzeugsitz abgewandten Seite des elastisch deformierbaren Beabstandungselements angeordnet ist. Dadurch kann das entsprechende Führungselement besonders vorteilhaft ausgebildet werden, um besonders gut die Führung des Gurtelements gewährleisten zu können.

Gemäß einer alternativen Ausführungsform kann es vorgesehen sein, dass das Gurtelement zwischen dem Fahrzeugsitz und dem elastisch deformierbaren Beabstandungselement angeordnet ist, wobei auf ein Führungselement verzichtet werden kann. Bei einem Verzicht auf das Führungselement und der Anordnung des Gurtelements zwischen Beabstandungselement und dem Fahrzeugsitz ist eine Führung des Gurtelement bereits inhärent vorgegeben.

Weiterführende Ausgestaltungen und Ausbildungen in den Ausführungsformen untereinander sind auf die weiteren Ausführungen anwendbar und sind untereinander frei kombinierbar, sofern sie nicht gegenläufigen Ausführungsformen entsprechen.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen.

Die Erfindung wird nachfolgend in Zusammenhang mit den Figuren näher dargestellt.

Es zeigen:
- Fig. 1A: einen Fahrzeugsitz des Standes der Technik;
- Fig. 1B: einen erfindungsgemäßen Fahrzeugsitz;
- Fig. 1C: einen Vergleich der Fahrzeugsitze gemäß den Figuren 1A und 1B;
- Fig. 2A: den Fahrzeugsitz gemäß einer bevorzugten Ausführungsform in einer Vorderansicht;
- Fig. 2B: den Fahrzeugsitz gemäß Figur 2A in einer Seitenansicht;
- Fig. 2C: den Fahrzeugsitz gemäß Figur 2A in einer perspektivischen Ansicht von hinten;
- Fig. 3A: einen Fahrzeugsitz gemäß einer Ausführungsform in einer Vorderansicht;
- Fig. 3B: den Fahrzeugsitz gemäß Figur 3A in einer Rückansicht;
- Fig. 4A: einen Fahrzeugsitz gemäß einer Ausführungsform in einer Vorderansicht;
- Fig. 4B: den Fahrzeugsitz gemäß Figur 4A in einer Rückansicht;
- Fig. 5A: einen Fahrzeugsitz gemäß einer Ausführungsform in einer Vorderansicht;
- Fig. 5B: den Fahrzeugsitz gemäß Figur 5A in einer Rückansicht;
- Fig. 6A: das Beabstandungselement in einer Null-Position;
- Fig. 6B: das Beabstandungselement in einer deformierten Position;
- Fig. 6C: das Beabstandungselement in einer deformierten Position;
- Fig. 7: eine Schnittdarstellung der Umlenkeinheit;
- Fig. 8A: eine Seitenansicht der Umlenkeinheit;
- Fig. 8B: eine Schnittansicht entlang B-B;
- Fig. 8C: eine Schnittansicht entlang C-C;
- Fig. 8D: eine Schnittansicht entlang D-D;
- Fig. 9A: eine Darstellung einer Verbindungsplatte;
- Fig. 9B: die Verbindungsplatte mit montiertem Beabstandungselement;
- Fig. 9C: verschiedene Drehpositionen des Beabstandungselements;
- Fig. 9D: verschiedene Verlagerungspositionen des Beabstandungselements.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

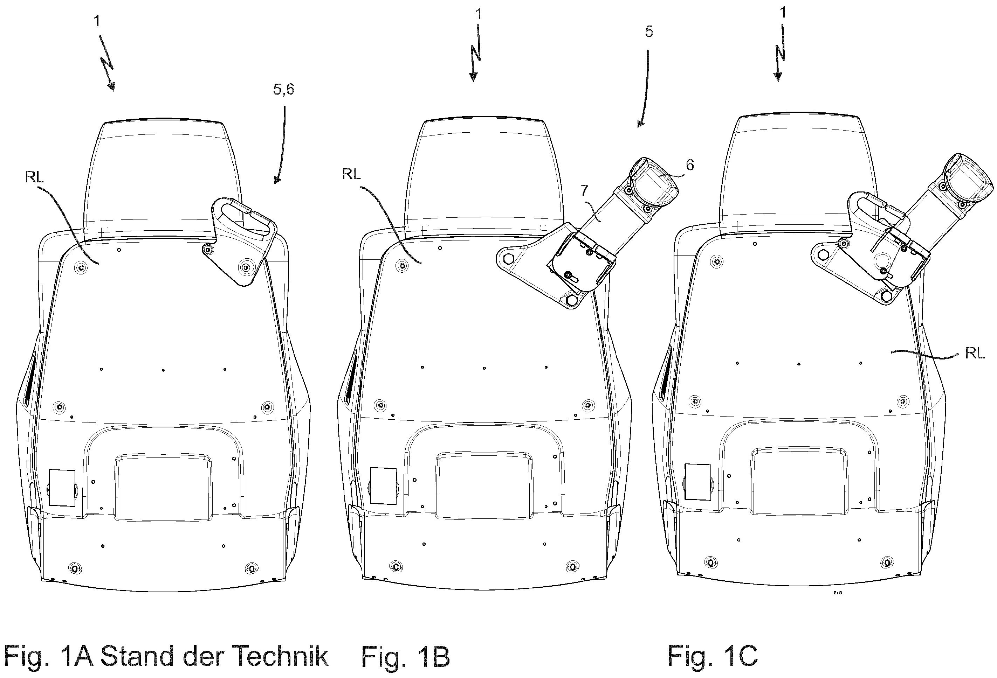

Gemäß der Figur 1A ist ein Fahrzeugsitz 1 gemäß dem bekannten Stand der Technik dargestellt, wobei der Fahrzeugsitz 1 eine Rückenlehne RL aufweist, an welcher eine Umlenkeinheit 5 mit einem Umlenkelement 6 gezeigt ist. Auf ein Gurtsystem 2 mit einem Gurtelement 3 sowie dem Auf- und Abrollmechanismus 4 wurde an dieser Stelle zu Übersichtlichkeit verzichtet.

Wie gemäß der Figur 1A zu erkennen ist, ist das Umlenkelement 6 relativ nahe bei der Rückenlehne RL angeordnet, sodass eine ergonomische bzw. komfortable Führung und Umlenkung eines Gurtelements 3 nicht bereitgestellt werden kann.

Demgegenüber ist in der Figur 1B ein Fahrzeugsitz 1 gemäß einer bevorzugten Ausführungsform der Erfindung gezeigt, wobei an dem Fahrzeugsitz 1 wiederum das Umlenkelement 6 der Umlenkeinheit 5 an der Rückenlehne RL angeordnet ist. Das Umlenkelement 6 ist dabei mittels eines Beabstandungselements 7 mit der Rückenlehne RL verbunden. Durch das Beabstandungselement 7 ist es möglich, das Umlenkelement 6, wie gezeigt, relativ weit von der Rückenlehne RL beabstandet anzuordnen.

Ein Vergleich zwischen dem Fahrzeugsitz 1 gemäß dem Stand der Technik und dem Fahrzeugsitz 1 gemäß der vorliegenden Erfindung ist in der Figur 1C gezeigt, wobei deutlich zu erkennen ist, wie der Unterschied der Anordnung des jeweiligen Umlenkelements 6 zu der Rückenlehne RL bzw. dem Fahrzeugsitz 1 ist.

Durch die weiter außen liegende Anordnung des Umlenkelements 6 ist eine bessere bzw. optimalere Ergonomie des Gurtsystems 2 bzw. eine Führung des Gurtelements 3 möglich. Besonders bevorzugt im Vergleich zu dem Stand der Technik aus der Figur 1A kann in totalen Zahlen das Umlenkelement 6 gegenüber dem Stand der Technik um mehr als 100 mm in einer Breitenrichtung B und mehr als 50 mm in einer Höhenrichtung H weiter außen hinsichtlich des Fahrzeugsitzes 1 angeordnet werden. Besonders bevorzugt kann das Umlenkelement 6 um bis zu 130 mm in der Breitenrichtung B und bis zu 80 mm in der Höhenrichtung H weiter außen gegenüber dem Stand der Technik angeordnet werden.

In den nachfolgenden Figuren werden weitere Ausgestaltungen, Ausbildungen und Eigenschaften der vorliegenden Erfindung weiter näher dargestellt.

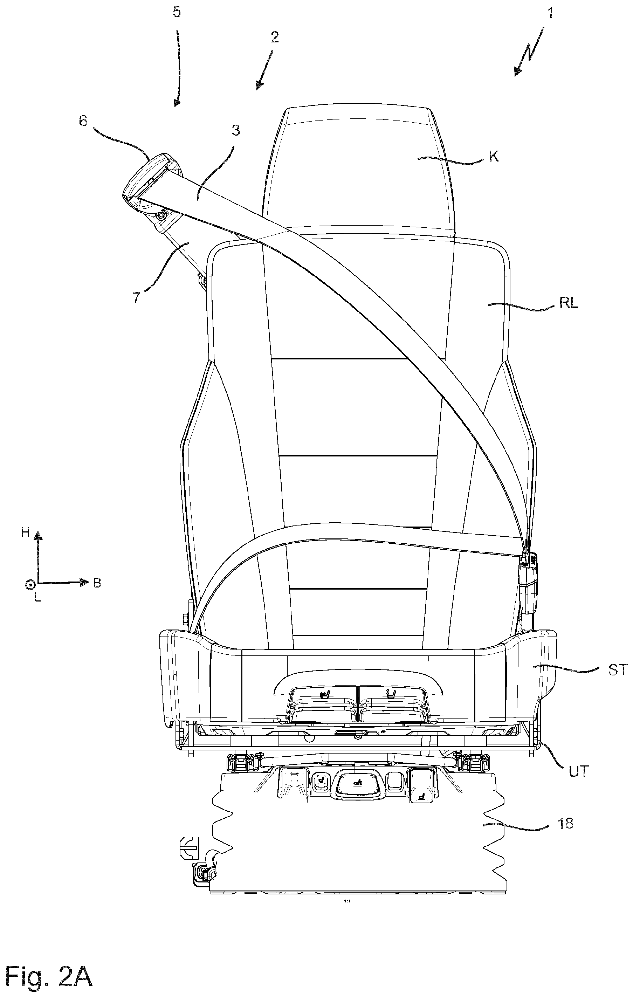

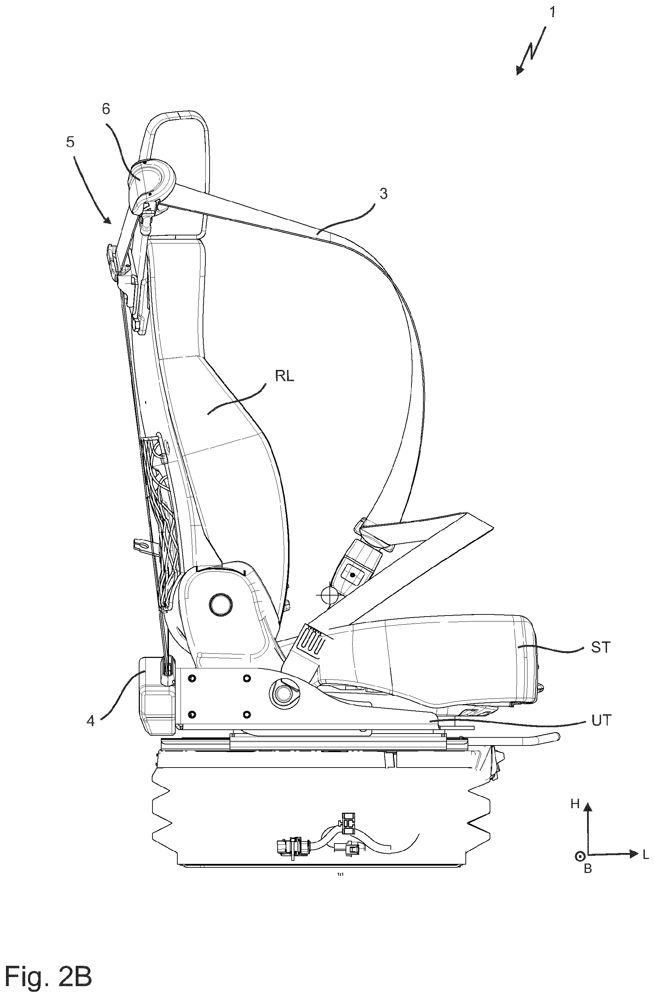

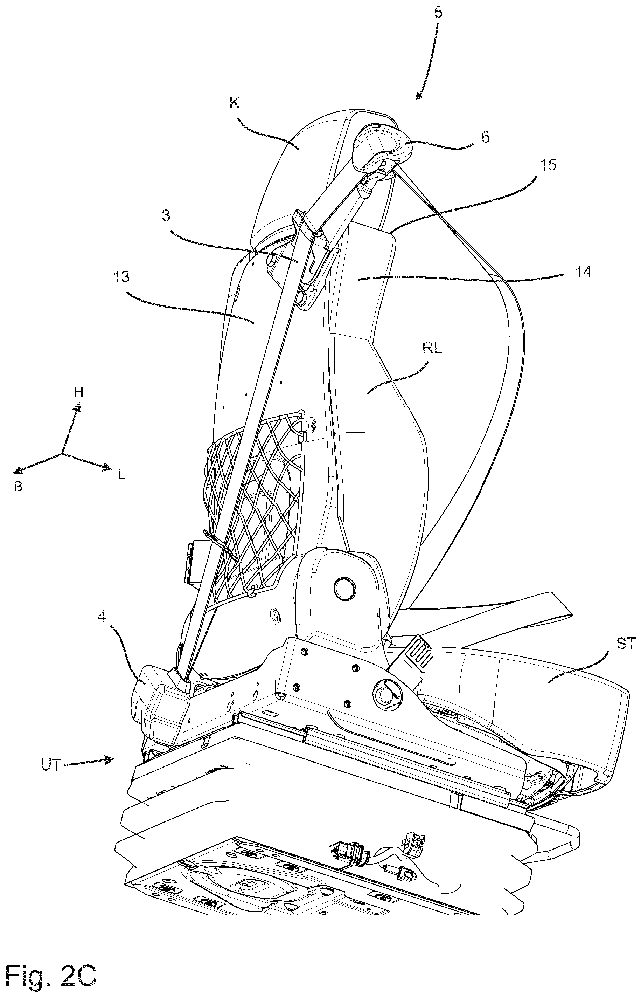

In der Figur 2A ist ein Fahrzeugsitz 1 gemäß einer bevorzugten Ausführungsform von vorne dargestellt, in der Figur 2B in einer Seitendarstellung und in der Figur 2C in einer perspektivischen Darstellung von hinten.

Wie zu erkennen ist, umfasst der Fahrzeugsitz 1 gemäß einer bevorzugten Ausführungsform eine Rückenlehne RL, ein Sitzteil ST und ein Fahrzeugsitzunterteil UT, wobei das Fahrzeugsitzunterteil UT unterhalb des Sitzteils ST angeordnet ist, und wobei das Sitzteil ST mit dem Fahrzeugsitzunterteil UT verbunden ist. Das Fahrzeugsitzunterteil UT umfasst weiter bevorzugt eine Feder- und/oder Dämpfungseinheit 18, welche in diesem Beispiel lediglich beispielhaft gekennzeichnet ist und auf Federeinheiten und Dämpfungseinheiten an sich verzichtet worden ist.

Weiter kann der Fahrzeugsitz 1 eine Kopfstütze K umfassen.

Weiter ist das Gurtsystem 2 mit einem Gurtelement 3 dargestellt, wobei das Gurtsystem 2 einen aus dem Stand der Technik bekannt kannten 3-Punktgurt darstellen kann. Das Umlenkelement 6 der Umlenkeinheit 5 ist dabei mittels des Beabstandungselements 7 mit dem Fahrzeugsitz 1, hier mit der Rückenlehne RL, verbunden und von diesem beabstandet. Das Umlenkelement 6 ist dabei dazu vorgesehen und ausgebildet, das Gurtelement 3 entsprechend umzulenken und zu der Person hinzuführen. Die Person ist hier nicht dargestellt, kann aber auf dem Sitzteil ST bzw. dem Fahrzeugsitz 1 sitzend vorgestellt werden. Auf die näheren Ausführungen hinsichtlich des der 3-Punktgurtes kann verzichtet werden.

In der Figur 2B ist der Fahrzeugsitz 1 gemäß der Figur 2A in einer Seitenansicht dargestellt, wobei nun auch der Auf- und Abrollmechanismus 4 zu erkennen ist, welcher vorliegend mit dem Fahrzeugsitzunterteil UT verbunden ist und dabei bevorzugt hinter dem Fahrzeugsitz 1 mit dem Fahrzeugsitz 1 angeordnet und verbunden ist. Der Auf- und Abrollmechanismus ist dabei vorliegend mit dem Fahrzeugsitzunterteil UT verbunden, wobei es auch denkbar ist, dass der Auf- und Abrollmechanismus 4 mit dem Sitzteil ST, der Rückenlehne RL oder anderen Elementen des Fahrzeugsitzes 1 verbunden sein kann.

In der Figur 2C ist der Fahrzeugsitz gemäß den Figuren 2A und 2B nochmals in einer perspektivischen Ansicht von hinten dargestellt.

Besonders bevorzugt ist das Umlenkelement 6 und die Umlenkeinheit 5 dabei derart ausgebildet, das Gurtelement 3, welches aus dem Auf- und Abrollmechanismus 4 heraus bereitgestellt werden kann, in den gezeigten Ausführungsformen gemäß der Figur 2A, 2B und 2C dargestellt, von dem Auf- und Abrollmechanismus 4 von einer Position relativ weit unten hinsichtlich des Fahrzeugsitzes 1 und hinter dem Fahrzeugsitz 1 nach oben und von dem Umlenkelement 6 von oben hinten nach oben vorne und wieder nach unten zu führen.

Die verschiedenen Möglichkeiten bzw. Ausführungsformen hinsichtlich der Führung des Gurtelements 3 ist in den nachfolgenden Figuren näher dargestellt.

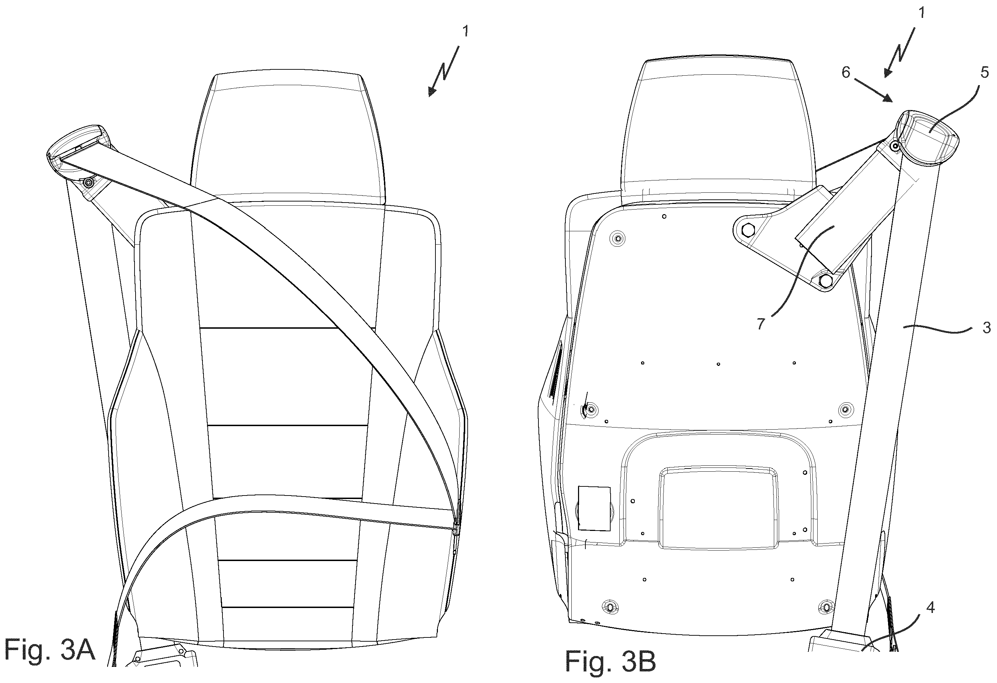

In den Figuren 3A und 3B ist die Gurtführung derart ausgebildet, dass zwischen dem Aufund Abrollmechanismus 4 und dem Umlenkelement 6 keine weitere Führung angeordnet ist, d. h., dass das Gurtelement 3 lediglich durch den Auf- und Abrollmechanismus 4 sowie dem Umlenkelement 6 hinter der Rückenlehne RL geführt ist.

Dabei ist es vorgesehen, dass das Gurtelement 3 auf einer dem Fahrzeugsitz 1 abgewandten Seite des Beabstandungselements 7 angeordnet ist. Das bedeutet, dass in der Längsrichtung L gesehen das Beabstandungselement hinter dem Fahrzeugsitz 1 angeordnet ist und das Gurtelement 3 hinter dem Beabstandungselement 7.

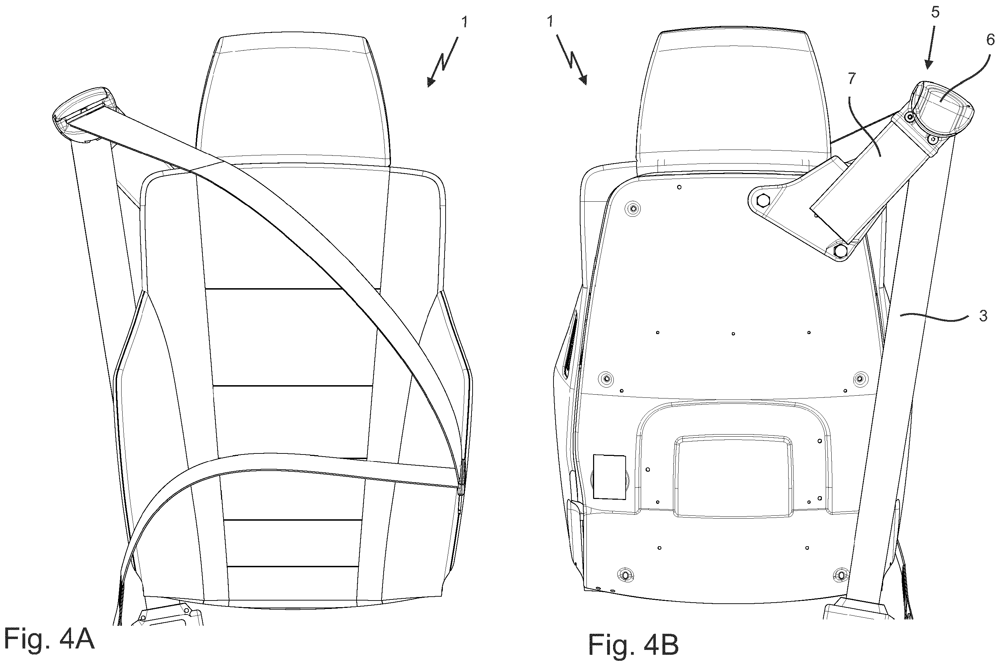

In den Figuren 4A und 4B ist eine alternative Ausführungsform zu den Figuren 3A und 3B dargestellt, wobei nun das Gurtelement 3 nicht hinter dem Beabstandungselement 7 angeordnet ist, sondern derart, dass das Gurtelement 3 zwischen dem Fahrzeugsitz 1 und dem Beabstandungselement 7 angeordnet ist. Dies bedeutet, dass das Gurtelement 3 in der Längsrichtung L gesehen hinter dem Fahrzeugsitz 1 angeordnet ist und das Beabstandungselement 7 hinter dem Gurtelement 3.

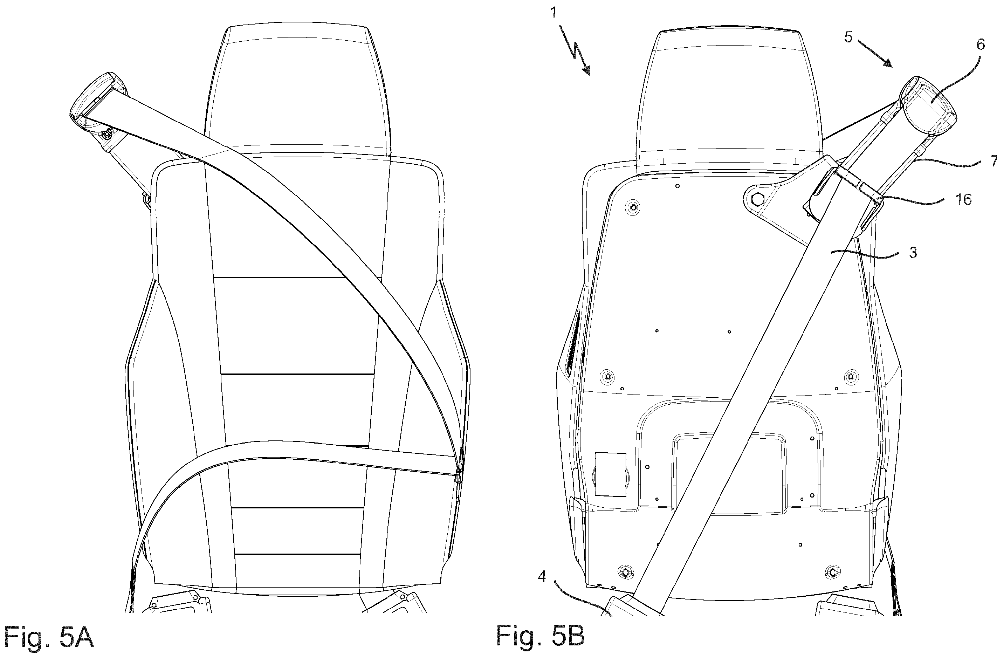

Gemäß den Figuren 5A und 5B ist eine weitere Ausführungsform der Führung des Gurtelements 3 dargestellt, wobei ein Führungselement 16 vorgesehen ist, welches hinsichtlich des Gurtelements 3 bzw. dessen Führung zwischen dem Auf- und Abrollmechanismus 4 sowie dem Umlenkelement 6 angeordnet ist. Gemäß der vorliegenden Figur 5B ist es vorgesehen, dass das Führungselement 16 mit dem Beabstandungselement 7 verbunden ist. Grundsätzlich ist es auch möglich, dass das Führungselement 16 mit dem Fahrzeugsitz 1, beispielsweise der Rückenlehne RL, verbunden ist. Das Führungselement 16 ist dabei derart ausgebildet, dass eine Führung des Gurtelements 3 und gegebenenfalls eine geringe Ablenkung des Gurtelements 3 möglich ist.

In der vorliegenden Ausführungsform gemäß der Figur 5B ist es vorgesehen, dass das Führungselement 16 in Längsrichtung L gesehen hinter dem Beabstandungselement 7 angeordnet ist und mit diesem verbunden ist.

Es wäre auch grundsätzlich möglich, dass das Führungselement 16 zwischen dem Fahrzeugsitz 1 bzw. der Rückenlehne RL und dem Beabstandungselement 7 angeordnet ist, dies ist insbesondere dann vorteilhaft, wenn die Gurtführung des Gurtelements 3 derart ist, dass das Gurtelement 3 zwischen dem Fahrzeugsitz 1 und dem Beabstandungselement 7 angeordnet ist.

In den weiteren Figuren wird nun die Funktionsweise des Beabstandungselements 7 sowie die Ausgestaltungen bzw. Ausführungen hinsichtlich des Beabstandungselements 7 näher dargestellt.

Erfindungsgemäß ist es vorgesehen, dass das Beabstandungselement 7 elastisch deformierbar ausgebildet ist, also als ein elastisch deformierbares Beabstandungselement 7 ausgebildet ist. Weiter bevorzugt ist es vorgesehen, dass für den Fall, dass keine Kraft durch eine Bewegung des Gurtelements 3 auf das Beabstandungselement 7 einwirkt, sich das Beabstandungselement 7 in einer Null-Position befindet, d. h., nicht deformiert ist. Wirken jedoch insbesondere Zugkräfte durch Zugkräfte, welche auf das Gurtelement 3 einwirken, auf das Beabstandungselement 7, so wird das Beabstandungselement 7 entsprechend deformiert und befindet sich demnach in einem deformierten Zustand. Dadurch, dass insbesondere Zugkräfte auf das Beabstandungselement 7 einwirken, wird das Beabstandungselement 7 entsprechend in Richtung des Zuges deformiert, d. h. bevorzugt in Längsrichtung L nach vorne.

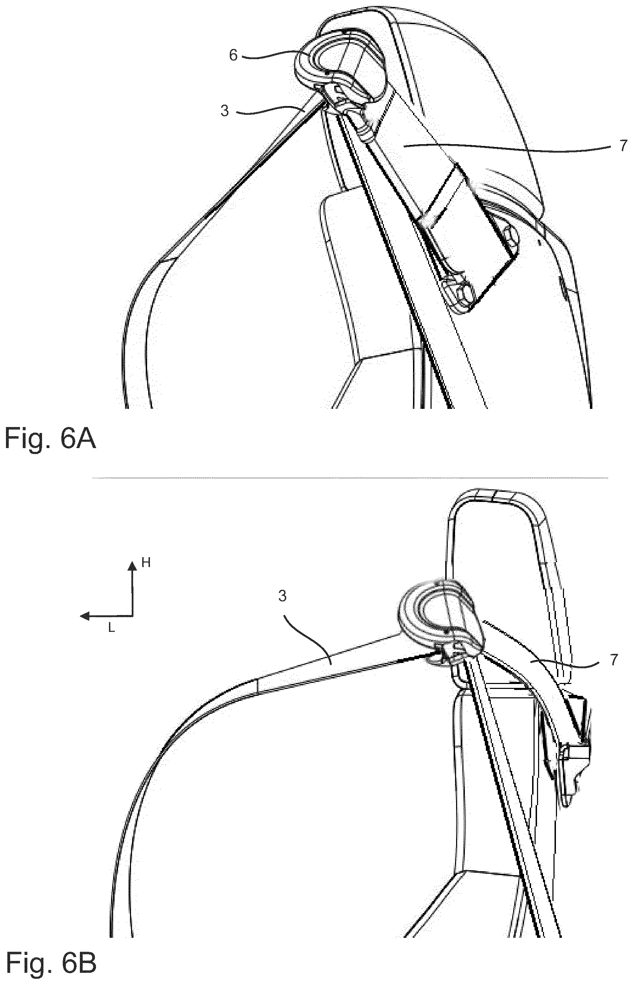

In der Figur 6A ist das Beabstandungselement 7 in der Null-Position dargestellt. Das bedeutet, dass keine Kräfte auf das Beabstandungselement 7 einwirken, da keine Kräfte auf das Gurtelement 3 einwirken.

In der Figur 6B hingegen ist das Beabstandungselement 7 in einem deformierten Zustand dargestellt, wobei durch Einwirkung von Kräften auf das Gurtelement 3 in der Längsrichtung L nach vorne dementsprechend auch über das Umlenkelement 6 die Kräfte auf das Beabstandungselement 7 übertragen werden können, was dazu führt, dass das Beabstandungselement 7 nach vorne deformiert wird. Weiter ist in der Figur 6B die Ausführungsform dargestellt, dass das Beabstandungselement 7 nach vorne deformiert wird. Weiter ist in der Figur 6B die Ausführungsform dargestellt, dass das Gurtelement 3 in der Null-Position zwischen dem Fahrzeugsitz 1 und dem Beabstandungselement 7 angeordnet ist, und dementsprechend von dem Beabstandungselement 7 nach vorne bewegt wird mit dem Umlenkelement 6.

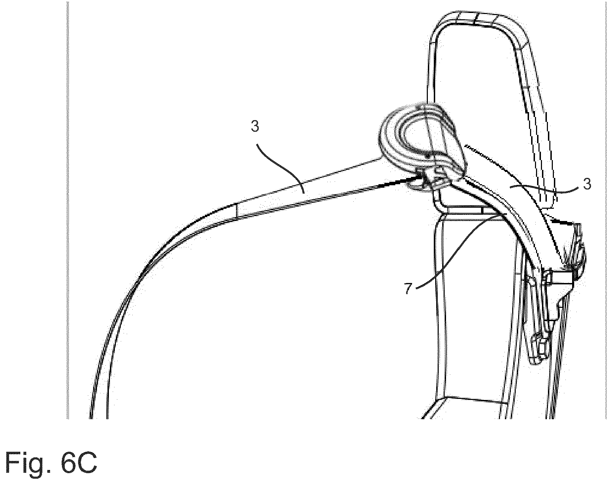

In der Figur 6C ist die Ausgangssituation wie in der Figur 6B, jedoch ist das Gurtelement 3 hier in diesem Falle hinter dem Beabstandungselement 7 angeordnet, sodass sich das Gurtelement 3 entsprechend mit dem Beabstandungselement 7 bewegt.

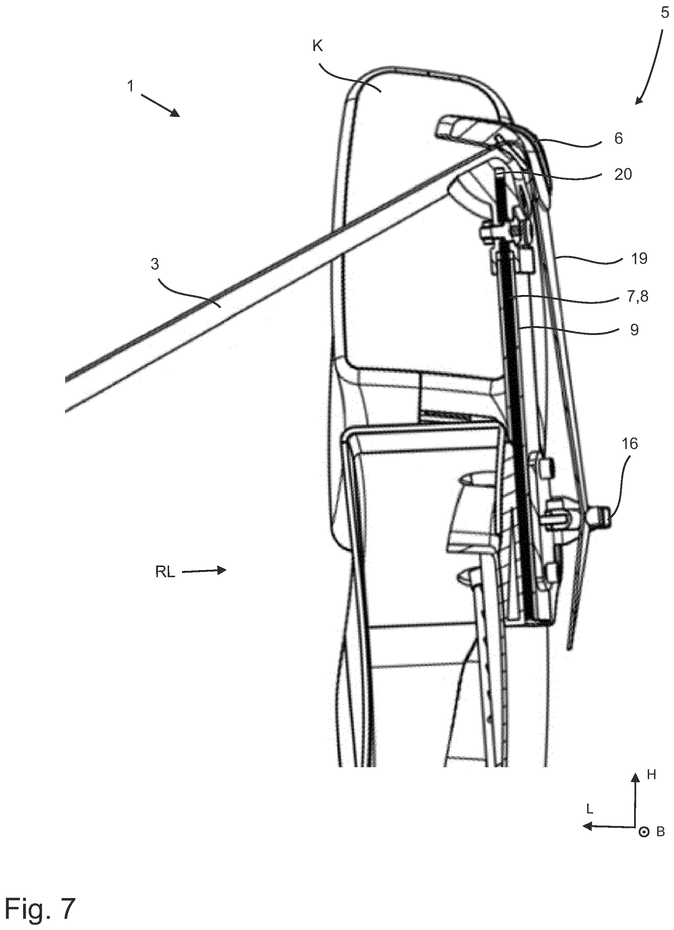

In der Figur 7 ist eine Schnittdarstellung eines Teils des Fahrzeugsitzes 1 dargestellt, wobei der Schnitt derart ist, dass das Beabstandungselement 7, das Umlenkelement 6 und weitere Merkmale der Umlenkeinheit 5 in der Schnittdarstellung zu sehen sind.

Besonders bevorzugt ist es vorgesehen, dass das Umlenkelement 6 einen Schlitz 20 aufweist, welcher dazu ausgebildet und vorgesehen ist, auf das Beabstandungselement 7 aufgesteckt zu werden, so dass sich das Beabstandungselement 7 teilweise in das Umlenkelement 6 hinein erstreckt. Weiter bevorzugt ist der Schlitz 20 derart ausgebildet, dass dieser einen Bauraum und einen Freiraum für die Bewegung des Beabstandungselements 7 bei Deformation des Beabstandungselements 7 bereitstellt. Weiter ist es vorgesehen, dass eine erste Schraubverbindung 19 vorgesehen ist, welche ebenfalls zur Verbindung zwischen dem Umlenkelement 6 und dem Beabstandungselement 7 vorgesehen ist. Auf die weiteren Ausführungen der ersten Schraubverbindung 19 wird in den nachfolgenden Figuren näher eingegangen.

Weiter ist zu erkennen, dass das Beabstandungselement 7 eine Schichtstruktur 8 aufweist, mit zumindest mehreren Schichten 9. Dabei sind die Schichten 9 derart angeordnet, dass diese übereinanderliegend sind. Besonders bevorzugt sind die jeweiligen Schichten 9 aus einem Blattfederelement ausgebildet. Hierdurch ist es möglich, eine besonders einfache Konstruktion des Beabstandungselement 7 bereitzustellen. Insbesondere ist die Schichtstruktur 8 mit den Schichten 9 derart, dass die Schichten 9 bei einer Deformierung des Beabstandungselements 7 zueinander bewegbar sind, d. h., dass sich die Schichten 9 zueinander verlagern bzw. verschieben können. Dies ist dahingehend vorteilhaft, um der Deformation bzw. der Bewegung des Beabstandungselements 7 nachfolgend zu können, aufgrund der Einwirkung von Kräften.

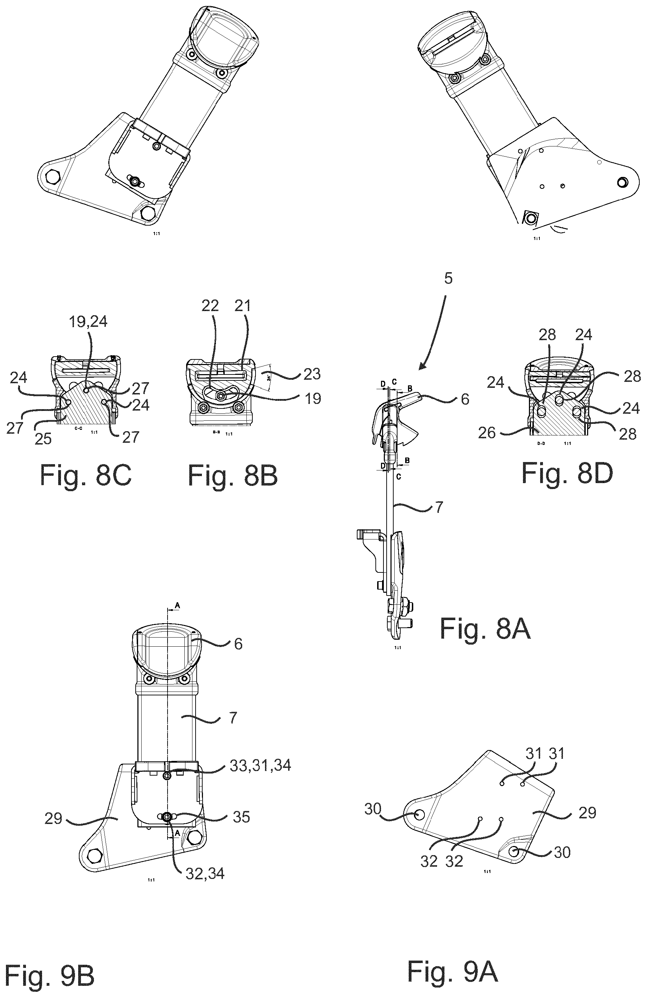

In der Figur 8A ist nochmals das Beabstandungselement 7 mit dem Umlenkelement 6 dargestellt, wobei auf den Fahrzeugsitz 1 bzw. das Gurtsystem 2 mit dem Gurtelement 3 verzichtet worden ist. In der Figur 8A sind weitere Schnitte dargestellt, einmal ein Schnitt B-B, welche in der Figur 8B dargestellt ist, 1chnitt C-C, welcher in der Figur 8C dargestellt ist, und einen Schnitt D-D, welcher in der Figur 8D dargestellt ist.

In der Figur 8B ist das Umlenkelement 6 nochmals näher dargestellt. Insbesondere umfasst das Umlenkelement 6 einen Führungsschlitz 21, welcher dazu vorgesehen und ausgebildet ist, dass das Gurtelement 3 durch den Führungsschlitz 21 hindurch von hinten nach vorne durch das Umlenkelement 6 hindurchreichen kann. Weiter ist nochmals die erste Schraubverbindung 19 dargestellt, wobei das Umlenkelement 6 weiter eine Führungsnut 22 aufweist, welche dazu vorgesehen ausgebildet ist, dass die erste Schraubverbindung 19 in der Führungsnut 22 angeordnet ist. Die erste Schraubverbindung 19 ist dabei ortsfest gegenüber dem Beabstandungselement 7 angeordnet, sodass sich bei einer Bewegung des Gurtelements 3 in dem Umlenkelement 6, beispielsweise dem Führungsschlitz 21, bewegt, sich das Umlenkelement 6 durch eine Bewegung der Führungsnut 22 gegenüber der ersten Schraubverbindung 19 bewegt, sodass das Umlenkelement 6 um einen Winkel 23 gedreht werden kann. Der Winkel 23 ist dabei schematisch in der Figur 8B dargestellt. Der Winkel 23 ist dabei durch die Ausbildung bzw. Ausgestaltung der Führungsnut 22 limitiert, d. h., der Länge der Führungsnut 22.

In den Figuren 8C und 8D ist ein Sicherungselement 17 näher dargestellt, welches dazu ausgebildet vorgesehen ist, den Grenzwinkel 10 der Deformierung zu ermöglichen bzw. bereitzustellen. Das Sicherungselement 17 ist dabei derart, dass durch das Sicherungselement 17 die Schichten 9 der Schichtstruktur 8 miteinander verbunden sind. Auf die Ausgestaltung des Sicherungselement 17 wird im Folgenden näher eingegangen. Wie zu erkennen ist, ist gemäß der Figur 8C und 8D die Sicherungsverbindungen 24 vorgesehen, welche besonders bevorzugt auch als eine Schraubverbindung ausgebildet sein können. Die erste Schraubverbindung 19 kann dabei auch als eine Sicherungsverbindung 24 fungieren. Die Sicherungsverbindungen 24 sind dabei derart, dass die Schichten 9 der Schichtstruktur 8 des Beabstandungselements 7 miteinander verbunden sind. Auf der einen Seite bzw. der ersten Seite 25 des Beabstandungselements 7 sind die Sicherungsverbindung in 24 passgenau in entsprechende Löcher 27 eingebracht. Die Löcher 27 es sind dabei bevorzugt als Durchgangsöffnungen ausgebildet. Auf der anderen bzw. der zweiten Seite 26 des Beabstandungselements 7, wie in der Figur 8D dargestellt, sind die Sicherungsverbindungen 24 jeweils in einem Langloch 28 angeordnet. Bei einer Deformation des Beabstandungselements 7 verschieben sich entsprechend die Schichtstrukturen zueinander, sodass auch die Sicherungsverbindungen 24 eine entsprechende Bewegung erfahren, wobei die Sicherungsverbindungen 24 aufgrund der Ausgestaltung bzw. dem Vorsehen von Langlöchern 28 auf der zweiten Seite 26 dieser Bewegung gut nachfolgend können. Die Langlöcher 28 es sind dabei derart ausgebildet, dass die Sicherungsverbindungen 24 solange der Bewegung des Beabstandungselements 7 nachfolgend können, ist das jeweilige Ende des Langlochs 28 erreicht worden ist. Das Erreichen des Endes des Langloches 28 entspricht besonders bevorzugt dem Grenzwinkel 10.

In den nachfolgenden Figuren ist die Verbindung bzw. Anordnung des Beabstandungselements 7 an dem Fahrzeugsitz 1 im Näheren dargestellt.

Besonders bevorzugt ist es vorgesehen, dass das Beabstandungselement 7 mittels einer Verbindungsplatte 29 mit dem Fahrzeugsitz 1, beispielsweise der Rückenlehne RL, verbunden werden kann. Mittels der vorgesehenen Verbindungsplatte 29 können weitere Funktionen hinsichtlich der Drehbarkeit bzw. Verlagerbarkeit des Beabstandungselements 7 bereitgestellt werden. Dies wird in den nachfolgenden Figuren weiter erläutert.

Die Verbindungsplatte 29 weist insbesondere Löcher 30 auf, welche dazu vorgesehen und ausgebildet sind, mit einem entsprechenden Element, welches sich durch das Loch 30 hindurch erstreckt, mit dem Fahrzeugsitz 1 bzw. der Rückenlehne RL verbunden zu werden.

Weiter weist die Verbindungsplatte 29 erste Löcher 31 und zweite Löcher 32 auf. Besonders bevorzugt sind die ersten Löcher 31 in der Höhenrichtung H gesehen oberhalb der zweiten Löcher 32 vorgesehen. Die ersten Löcher 31 sind in der Breitenrichtung B voneinander beabstandet angeordnet. Gleiches gilt auch für die zweiten Löcher 32.

Besonders bevorzugt ist das Beabstandungselement 7 dabei jeweils mit einem ersten Loch 31 und einem zweiten Loch 32 mit der Verbindungsplatte 29 verbunden.

Je nachdem, mit welchen Löchern 31, 32 das Beabstandungselement 7 mit der Verbindungsplatte 29 verbunden ist, können verschiedene Positionen des Beabstandungselements 7 hinsichtlich der Verbindungsplatte 29 und dementsprechend hinsichtlich des Fahrzeugsitzes 1 bzw. der Rückenlehne RL realisiert werden.

Gemäß der vorliegenden Figur 9B ist eine Verbindungsplatte 29 gezeigt, an welcher das Beabstandungselement 7 angeordnet ist. Dabei ist es vorgesehen, dass einerseits das Beabstandungselement 7 mit einem ersten Loch 31 und mit einem zweiten Loch 32 verbunden ist bzw. über diese Löcher 31, 32 mit der Verbindungsplatte 29 verbindbar ist. In die Löcher 31,32 sind Schraubverbindungen 34 eingebracht, welche derart sind, dass das Beabstandungselement 7 mit der Verbindungsplatte 29 verbunden werden können. Die Verbindung hinsichtlich des ersten Loches 31 ist dabei derart, dass das Beabstandungselement eine Drehachse 23 hier ausbildet. Weiter bevorzugt ist ein Langloch 35 des Beabstandungselements 7 vorgesehen, welches dazu vorgesehen ausgebildet ist, dass das Langloch 35 gegenüber der Schraubverbindung 34 bewegbar ist. Es ist jedoch auch bevorzugt vorgesehen, dass die Schraubverbindung 34 so fest das Beabstandungselement 7 derart an die Verbindungsplatte 29 anliegen lässt, sodass eine Bewegung im Langloch 35 bzw. des Langloch 35 verhindert wird. Eine Drehung des Beabstandungselements 7 ist entsprechend den Ausgestaltungen des Langloches 35 möglich.

Grundsätzlich ist es denkbar, dass das Beabstandungselement 7 in einem beliebigen ersten Loch 31 und in einem beliebigen zweiten Loch 32 an die Verbindungsplatte 29 verbunden werden kann. Je nachdem, welche Löcher 31, 32 zur Befestigung des Beabstandungselement 7 an der Verbindungsplatte 29 ausgebildet sind, ändert sich entsprechend die Positionierung des Beabstandungselements 7 hinsichtlich der Verbindungsplatte 29 dementsprechend ebenso gegenüber dem Fahrzeugsitz 1.

Ebenso ist es vorgesehen, dass das Beabstandungselement 7 lösbar mit der Verbindungsplatte 29 verbunden ist, sodass während eines Gebrauchs des Fahrzeugsitzes 1 die Positionierung des Beabstandungselements 7 entsprechend den Vorgaben einer Person angepasst werden kann.

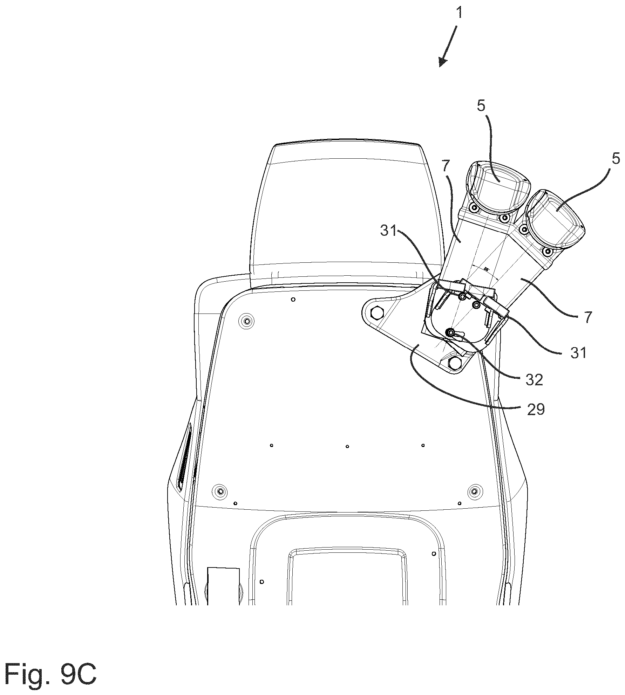

Gemäß der Figur 9C ist die Positionierung des Beabstandungselement 7, wie gerade beschrieben, dargestellt. Dabei ist es vorgesehen, dass das Beabstandungselement 7 aus einem ersten Loch 31 gelöst wird und gegenüber der Verbindungsplatte 29 gedreht wird und mit einem weiteren ersten Loch 31 verbunden wird. Die Verbindung mit dem zweiten Loch 32 bleibt unverändert. Wie zu erkennen ist, ist das Resultat eine Drehung bzw. Verschwenkung des Beabstandungselements 7 um die Drehachse, welche durch das zweite Loch 32 ausgebildet ist.

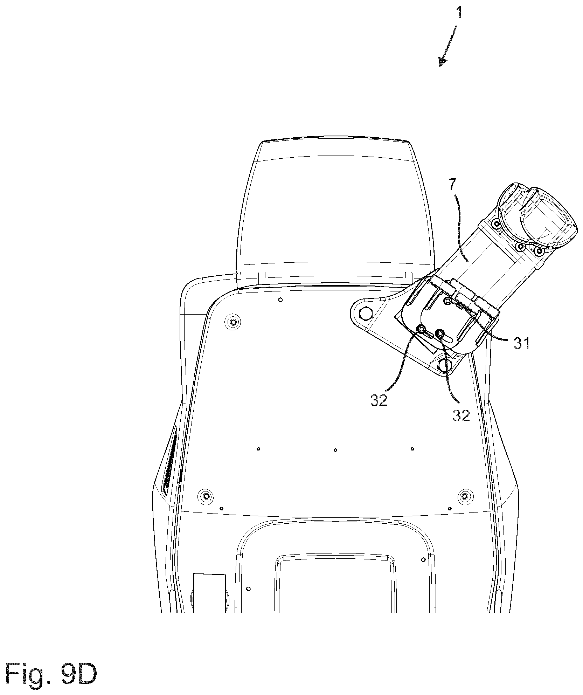

Gemäß der Figur 9D ist eine weitere Situation dargestellt, wobei die Positionierung des Beabstandungselements 7 dahingehend geändert worden ist, dass sowohl die Position bzw. die Verbindung zu einem ersten Loch 31 und zu einem zweiten Loch 32 geändert worden ist.

### Bezugszeichenliste

- 1: Fahrzeugsitz
- 2: Gurtsystem
- 3: Gurtelement
- 4: Auf- und Abrollmechanismus
- 5: Umlenkeinheit
- 6: Umlenkelement
- 7: Beabstandungselement
- 8: Schichtstruktur
- 9: Schicht
- 10: Grenzwinkel
- 11: erstes Ende des Beabstandungselements
- 12: zweites Ende des Beabstandungselements
- 13: rückwärtiges Teil
- 14: seitliches Teil
- 15: oberes Teil
- 16: Führungselement
- 17: Sicherungselement
- 18: Feder- und/oder Dämpfungseinheit
- 19: erste Schraubverbindung
- 20: Schlitz
- 21: Führungsschlitz
- 22: Führungsnut
- 23: Winkel
- 24: Sicherungsverbindung
- 25: erste Seite
- 26: zweite Seite
- 27: Loch
- 28: Langloch
- 29: Verbindungsplatte
- 30: Loch
- 31: erstes Loch
- 32: zweites Loch
- 33: Drehachse
- 34: Schraubverbindung
- 35: Langloch
- RL: Rückenlehne
- ST: Sitzteil
- UT: Fahrzeugsitzunterteil
- K: Kopfstütze

## Patentansprüche

1. Fahrzeugsitz (1) mit einem Gurtsystem (2), wobei das Gurtsystem (2) ein Gurtelement (3) und einen Auf- und Abrollmechanismus (4) aufweist, welcher dazu vorgesehen und ausgebildet ist, das Gurtelement (3) auf- und abzurollen, und wobei das Gurtsystem (3) eine Umlenkeinheit (5) mit einem Umlenkelement (6) aufweist, wobei das Umlenkelement (6) dazu vorgesehen und ausgebildet ist, das Gurtelement (3) in Richtung einer Person umzulenken,
wobei
die Umlenkeinheit (5) ein Beabstandungselement (7) aufweist, welches an dem Fahrzeugsitz (1) angeordnet ist und wobei das Umlenkelement (6) derart an dem Beabstandungselement (7) angeordnet ist, dass das Umlenkelement (6) von dem Fahrzeugsitz (1) beabstandet ist, und wobei das Beabstandungselement (7) elastisch deformierbar ist,
**dadurch gekennzeichnet, dass**
das elastisch deformierbare Beabstandungselement (7) derart ausgebildet ist, dass bei einer Deformierung des Beabstandungselements (7) bis zu einem vorbestimmten Grenzwinkel (10) die Deformierung des Beabstandungselements (7) elastisch ist und ab dem Grenzwinkel (10) die Deformierung des Beabstandungselements (7) plastisch ist.

2. Fahrzeugsitz (1) nach Anspruch 1,
**dadurch gekennzeichnet, dass**
das elastisch deformierbare Beabstandungselement (7) schichtartig ausgebildet ist mit zumindest zwei Schichten (9).

3. Fahrzeugsitz (1) nach Anspruch 2,
**dadurch gekennzeichnet, dass**
jede Schicht (9) ein Blattfederelement ist.

4. Fahrzeugsitz (1) nach einem der Ansprüche 1 bis 3,
**dadurch gekennzeichnet, dass**
das Beabstandungselement (7) länglich ausgebildet ist und ein erstes Ende (11) und ein zweites Ende (12) aufweist, wobei das erste Ende (11) mit dem Fahrzeugsitz (1) verbunden ist und an dem zweiten Ende (12) das Umlenkelement (6) angeordnet ist.

5. Fahrzeugsitz (1) nach einem der Ansprüche 1 bis 4,
**dadurch gekennzeichnet, dass**
das elastisch deformierbare Beabstandungselement (7) gegenüber dem Fahrzeugsitz (1) verlagerbar und/oder drehbar angeordnet ist.

6. Fahrzeugsitz (1) nach einem der Ansprüche 1 bis 5,
**dadurch gekennzeichnet, dass**
das elastisch deformierbare Beabstandungselement (7) aus einem oder mehreren Metallen und/oder Metalllegierungen besteht, wobei bevorzugt das Beabstandungselement (7) aus einem korrosionsbeständigen Federstahl besteht.

7. Fahrzeugsitz (1) nach einem der Ansprüche 1 bis 6,
**dadurch gekennzeichnet, dass**
das Umlenkelement (6) drehbar mit dem elastisch deformierbaren Beabstandungselement (7) verbunden ist.

8. Fahrzeugsitz (1) nach einem der Ansprüche 1 bis 7,
**dadurch gekennzeichnet, dass**
der Fahrzeugsitz (1) eine Rückenlehne (RL) aufweist, wobei das elastisch deformierbare Beabstandungselement (7) mit der Rückenlehne (RL) verbunden ist, bevorzugt derart, dass das Beabstandungselement (7) an einem rückwärtigen Teil (13) der Rückenlehne (RL), an einem seitlichen Teil (14) der Rückenlehne (RL), und/oder an einem oberen Teil (15) der Rückenlehne (RL) angeordnet ist.

9. Fahrzeugsitz (1) nach Anspruch 8,
**dadurch gekennzeichnet, dass**
der Auf- und Abrollmechanismus (4) hinter der Rückenlehne (RL) angeordnet ist, bevorzugt an einem Sitzteil (ST) des Fahrzeugsitzes (1) und/oder an einem Fahrzeugsitzunterteil (UT).

10. Fahrzeugsitz (1) nach einem der Ansprüche 1 bis 9,
**dadurch gekennzeichnet, dass**
zwischen dem Auf- und Abrollmechanismus (4) und dem Umlenkelement (6) ein Führungselement (16) angeordnet ist zum Führen des Gurtelements (3).

11. Fahrzeugsitz (1) nach Anspruch 10,
**dadurch gekennzeichnet, dass**
das Führungselement (16) zwischen dem Fahrzeugsitz (1) und dem elastisch deformierbaren Beabstandungselement (7) angeordnet ist.

12. Fahrzeugsitz (1) nach Anspruch 10,
**dadurch gekennzeichnet, dass**
das Führungselement (16) auf einer dem Fahrzeugsitz (1) abgewandten Seite des elastisch deformierbaren Beabstandungselements (7) angeordnet ist.

## Claims

1. Vehicle seat (1) with a belt system (2), wherein the belt system (2) comprises a belt element (3) and an unwinding and winding mechanism (4) which is designed and constructed to wind und unwind the belt element (3), and wherein the belt system (3) comprises a deflection unit (5) with a deflection element (6), wherein the deflection element (6) is designed and constructed to deflect the belt element (3) towards a person,
wherein
the deflection unit (5) has a spacer element (7) which is arranged on the vehicle seat (1) and wherein the deflection element (6) is arranged on the spacer element (7) in such a way that the deflection element (6) is spaced apart from the vehicle seat (1), and wherein the spacer element (7) is elastically deformable,
**characterised in that**
the elastically deformable spacer element (7) is designed such that, when the spacer element (7) is deformed up to a predetermined critical angle (10), the deformation of the spacer element (7) is elastic and, from the critical angle (10) onwards, the deformation of the spacer element (7) is plastic.

2. Vehicle seat (1) according to claim 1,
**characterised in that**
the elastically deformable spacer element (7) is designed in layers with at least two layers (9).

3. Vehicle seat (1) according to claim 2,
**characterised in that**
each layer (9) is a leaf spring element.

4. Vehicle seat (1) according to any one of claims 1 to 3,
**characterised in that**
the spacer element (7) is elongated and has a first end (11) and a second end (12), wherein the first end (11) is connected to the vehicle seat (1) and the deflection element (6) is arranged at the second end (12).

5. Vehicle seat (1) according to any one of claims 1 to 4,
**characterised in that**
the elastically deformable spacer element (7) is arranged so that it can be displaced and/or rotated relative to the vehicle seat (1).

6. Vehicle seat (1) according to any one of claims 1 to 5,
**characterised in that**
the elastically deformable spacer element (7) consists of one or more metals and/or metal alloys, wherein the spacer element (7) preferably consists of a corrosion-resistant spring steel.

7. Vehicle seat (1) according to one of claims 1 to 6,
**characterised in that**
the deflection element (6) is rotatably connected to the elastically deformable spacer element (7).

8. Vehicle seat (1) according to any one of claims 1 to 7,
**characterised in that**
the vehicle seat (1) has a backrest (RL), wherein the elastically deformable spacer element (7) is connected to the backrest (RL), preferably in such a way that the spacer element (7) is arranged on a rear part (13) of the backrest (RL), on a lateral part (14) of the backrest (RL), and/or on an upper part (15) of the backrest (RL).

9. Vehicle seat (1) according to claim 8,
**characterised in that**
the unwinding and winding mechanism (4) is arranged behind the backrest (RL), preferably on a seat part (ST) of the vehicle seat (1) and/or on a vehicle seat lower part (UT).

10. Vehicle seat (1) according to any of claims 1 to 9,
**characterised in that**
a guide element (16) is arranged between the unwinding and winding mechanism (4) and the deflection element (6) for guiding the belt element (3).

11. Vehicle seat (1) according to claim 10,
**characterised in that**
the guide element (16) is arranged between the vehicle seat (1) and the elastically deformable spacer element (7).

12. Vehicle seat (1) according to claim 10,
**characterised in that**
the guide element (16) is arranged on a side of the elastically deformable spacer element (7) facing away from the vehicle seat (1).

## Revendications

1. Siège de véhicule (1) avec un système de ceinture (2), le système de ceinture (2) présentant un élément de ceinture (3) et un mécanisme d'enroulement et de déroulement (4), lequel est prévu et conçu pour enrouler et dérouler l'élément de ceinture (3), et le système de ceinture (3) présentant une unité de déviation (5) avec un élément de déviation (6), l'élément de déviation (6) étant prévu et conçu pour dévier l'élément de déviation (3) en direction d'une personne,
l'unité de déviation (5) présentant un élément espaceur (7), lequel est disposé sur le siège de véhicule (1) et l'élément de déviation (6) étant disposé sur l'élément espaceur (7) de telle sorte que l'élément de déviation (6) est espacé du siège de véhicule (1), et l'élément espaceur (7) étant élastiquement déformable,
**caractérisé par le fait que**
l'élément espaceur (7) élastiquement déformable est conçu de telle sorte que, lors d'une déformation de l'élément espaceur (7) jusqu'à un angle limite prédéterminé (10), la déformation de l'élément espaceur (7) est élastique et, à partir de l'angle limite (10), la déformation de l'élément espaceur (7) est plastique.

2. Siège de véhicule (1) selon la revendication 1,
**caractérisé par le fait que**
l'élément espaceur (7) élastiquement déformable a une structure en couches avec au moins deux couches (9).

3. Siège de véhicule (1) selon la revendication 2,
**caractérisé par le fait que**
chaque couche (9) est un élément de ressort à lame.

4. Siège de véhicule (1) selon l'une des revendications 1 à 3,
**caractérisé par le fait que**
l'élément espaceur (7) est réalisé de forme allongée et présente une première extrémité (11) et une seconde extrémité (12), la première extrémité (11) étant reliée au siège de véhicule (1) et l'élément de déviation (6) étant disposé à la seconde extrémité (12).

5. Siège de véhicule (1) selon l'une des revendications 1 à 4,
**caractérisé par le fait que**
l'élément espaceur (7) élastiquement déformable est disposé de manière déplaçable et/ou rotative par rapport au siège de véhicule (1).

6. Siège de véhicule (1) selon l'une des revendications 1 à 5,
**caractérisé par le fait que**
l'élément espaceur (7) élastiquement déformable est fait d'un ou plusieurs métaux et/ou alliages métalliques, l'élément espaceur (7) étant, de préférence, fait d'un acier à ressort résistant à la corrosion.

7. Siège de véhicule (1) selon l'une des revendications 1 à 6,
**caractérisé par le fait que** que
l'élément de déviation (6) est relié de manière rotative à l'élément espaceur (7) élastiquement déformable.

8. Siège de véhicule (1) selon l'une des revendications 1 à 7,
**caractérisé par le fait que**
le siège de véhicule (1) présente un dossier (RL), l'élément espaceur (7) élastiquement déformable étant relié au dossier (RL), de préférence de telle sorte que l'élément espaceur (7) soit disposé sur une partie arrière (13) du dossier (RL), sur une partie latérale (14) du dossier (RL), et/ou sur une partie supérieure (15) du dossier (RL).

9. Siège de véhicule (1) selon la revendication 8,
**caractérisé par le fait que**
le mécanisme d'enroulement et de déroulement (4) est disposé derrière le dossier (RL), de préférence sur une partie de siège (ST) du siège de véhicule (1) et/ou sur une partie inférieure de siège de véhicule (UT).

10. Siège de véhicule (1) selon l'une des revendications 1 à 9,
**caractérisé par le fait qu'**
un élément de guidage (16) est disposé entre le mécanisme d'enroulement et de déroulement (4) et l'élément de déviation (6) pour guider l'élément de ceinture (3).

11. Siège de véhicule (1) selon la revendication 10,
**caractérisé par le fait que**
l'élément de guidage (16) est disposé entre le siège de véhicule (1) et l'élément espaceur (7) élastiquement déformable.

12. Siège de véhicule (1) selon la revendication 10,
**caractérisé par le fait que**
l'élément de guidage (16) est disposé sur un côté de l'élément espaceur (7) élastiquement déformable qui est opposé au siège de véhicule (1).
